# EUROPÄISCHE PATENTANMELDUNG

(11) **EP 1 154 260 A2**
(43) Veröffentlichungstag der Anmeldung: **14.11.2001**
(21) Anmeldenummer: 01110908.9
(22) Anmeldetag: 05.05.2001
(51) Int. Cl.: G01N 21/59, G01N 21/25, G01N 21/86

(54) **Abtastverfahren und Abtastvorrichtung zur optischen Dichtemessung**

(30) Priorität: 11.05.2000 DE 10023128
(71) Anmelder: MAN Roland Druckmaschinen AG, 63012 Offenbach (DE)
(72) Erfinder: Berchtold, Andreas, Dr., 82234 Wessling/OBB (DE); Schmid, Thomas, Dr., 79669 Zell (im Wiesental) (DE); Weichmann, Armin, 86438 Kissing (DE)
(74) Vertreter: Schober, Stefan, Dipl.-Ing.

(57) **Zusammenfassung**

Die Erfindung betrifft ein Abtastverfahren und eine Abtastvorrichtung (10) zur optischen Dichtemessung von vorzugsweise wenigstens einem auf einem Druckmedium (13) angeordneten Meßobjekt (17) mit Sensormitteln zum Abtasten des Meßobjekts. Die Erfindung sieht vor, daß die Sensor-mittel eine Anzahl von Meßköpfen (14) umfassen und daß in Abhängigkeit von der mittels eines ausgewählten Meßkopfes (14') vorgenommenen Detektierung eines auf dem Druckmedium (13) in einem in Transportrichtung des Druckmediums (13) vorbestimmten Abstand zum Meßobjekt (17) angeordneten Referenzobjektes (20) die daraufhin aktivierten Meßköpfe (14) das Meßobjekt (17) detektieren und abtasten. Dazu ist das Meßobjekt (17) als Meßstreifen ausgebildet, der sich quer zur Transportrichtung des Druckmediums (13) entlang dessen Breite erstreckt und eine linear angeordnete Kette von Meßfeldern (19) bestimmter Farbdichtewerte aufweist. Als Referenzobjekt (20) ist ein einzelnes Meßfeld (19) eines weiteren Meßstreifens (17) verwendbar.

## Beschreibung

Die Erfindung betrifft ein Abtastverfahren zum Betreiben einer Abtastvorrichtung zur optischen Dichtemessung von wenigstens einem auf einem Druckmedium angeordneten Meßobjekt, wobei das Meßobjekt mit Sensormitteln abgetastet wird, und ferner eine Abtastvorrichtung zur Durchführung des Abtastverfahrens.

Aus dem Stand der Technik, beispielsweise aus der DE 196 50 223 A1, sind ein solches Abtastverfahren und eine solche Abtastvorrichtung bekannt. Dabei wird zur optischen Dichtemessung das Druckmedium einem laufenden Druckprozeß entnommen und auf einer Meßtischeinrichtung positioniert und justiert, wobei ein oder mehrere auf dem Druckmedium angeordnete Meßobjekte mittels Sensoren ausgemessen werden. Unbefriedigend dabei ist, daß die optische Dichte lediglich "offline" gemessen werden kann.

Es besteht demgemäß die Aufgabe, ein Abtastverfahren der eingangs genannten Art und eine der Durchführung dieses Abtastverfahrens dienende Abtastvorrichtung zu schaffen, wodurch auf relativ zeitsparende Weise eine auf den Ort des abzutastenden Meßobjekts selektierte Dichtemessung durchführbar ist, die auch für "online"-Meßzwecke einsetzbar ist.

Die Aufgabe wird in verfahrenstechnischer Hinsicht dadurch gelöst, daß in Abhängigkeit von der Detektierung der Lage eines auf dem Druckmedium angeordneten Referenzobjektes und der relativen Lage des Meßobjekts zum Referenzobjekt das Meßobjekt abgetastet wird.

Charakteristisch für das erfindungsgemäße Abtastverfahren ist die Detektierung des Referenzobjekts und die dadurch definierte Steuerung der Abtastung des Meßobjekts, so daß das Abtastverfahren "online" oder "in-line", also während des laufenden Druckprozesses, einsetzbar ist.

Im Regelbetrieb des Druckprozesses, d.h. wenn die Transportgeschwindigkeit des Druckmediums annähernd konstant ist, kann eine Variante des erfindungsgemäßen Abtastverfahrens darin bestehen, daß nach Maßgabe der laufend ermittelten Geschwindigkeit des Druckmediums und des in Transportrichtung des Druckmediums vorbestimmt verlaufenden Abstands zwischen dem Referenzobjekt und dem Meßobjekt eine gegenüber dem Zeitpunkt der Detektion des Referenzobjekts zeitlich verzögert in Gang gesetzte Abtastung ausgelöst wird. In diesem Falle ist in Druckrichtung ein zeitliches Bezugssystem vorhanden.

In vorrichtungstechnischer Hinsicht ist die oben angegebene Aufgabe bei einer Abtastvorrichtung mit wenigstens einem auf einem Druckmedium angeordneten Meßobjekt und mit Sensormitteln zum Abtasten des Meßobjekts dadurch gelöst, daß die Sensormittel eine Anzahl von Meßköpfen umfassen und daß in Abhängigkeit von der mittels mindestens eines ausgewählten Meßkopfes vorgenommenen Detektierung wenigstens eines auf dem Druckmedium in vorbestimmten Abstand zu den Meßobjekten angeordneten Referenzobjektes die daraufhin aktivierten Meßköpfe das Meßobjekt abtasten. Die Abtastvorrichtung ist somit insbesondere für sog. "in-line"-Messungen, d.h. Messungen im laufenden Druckprozeß einsetzbar.

Eine vorteilhafte Weiterbildung der Erfindung kann darin bestehen, daß das Meßobjekt als sich in seiner Längserstreckung annähernd entlang einer quer zur Transportrichtung des Druckmediums verlaufenden Koordinatenrichtung erstreckender Meßstreifen ausgebildet ist, welcher eine linear angeordnete Kette von Meßfeldern bestimmter Farbdichtewerte aufweist, wobei jedem der Meßköpfe wenigstens ein Meßabschnitt zurDetektion und Abtastung zugeordnet ist, so daß sich dadurch eine präzise und kalibrierbare Dichtemessung durchführen läßt. Dazu läßt sich derselbe oder ein weiterer Meßstreifen auch zur Referenzmessung einsetzen, indem als Referenzobjekt wenigstens ein Meßfeld des Meßstreifens vorgesehen ist.

Weitere vorteilhafte Ausgestaltungen und Weiterbildungen der erfindungsgemäßen Abtastvorrichtung lassen sich den Unteransprüchen entnehmen.

Anhand der beigefügten Zeichnung sollen nachstehend Ausführungsformen der Erfindung näher erläutert werden. In schematischen Ansichten zeigen:
- Fig. 1: eine vereinfachte im wesentlichen stirnseitige Ansicht einer Ausführungsform der erfindungsgemäßen Abtastvorrichtung, die über einer ein Druckmedium umlenkenden Meßwalze einer Druckmaschine quer zur Transportrichtung des Druckmediums translatorisch bewegbar angeordnet ist, wobei die Abtastvorrichtung eine Anzahl von Meßköpfen zum Detektieren mindestens eines auf dem Druckmedium aufgebrachten Referenz- und Meßobjektes aufweist,
- Fig. 2: eine Teildraufsicht einer Ausführungsform eines quer zur Transportrichtung des Druckmediums angeordneten Meßobjektes zur optischen Dichtemessung, wobei das Meßobjekt als Meßstreifen mit darin sequentiell angeordneten Meßfeldern bestimmter Farbdichtewerte ausgebildet ist,
- Fig. 3: eine Seitenansicht einer weiteren Ausführungsform der in der Druckmaschine aufgenommenen Abtastvorrichtung mit einer zur Verarbeitung der von der Abtastvorrichtung erfaßten Meßwerte und zur Steuerung der Abtastvorrichtung vorgesehenen Steuerelektronikeinrichtung sowie
- Fig. 4: eine Prinzipskizze der zur erfindungsgemäßen Abtastvorrichtung gehörenden und zum Anschluß an eine Datenverarbeitungsanlage vorgesehenen Steuerelektronikeinrichtung, welche mehrere Eingabe/Ausgabe - Schnittstellen zur Meßwertaufnahme und Steuersignalausgabe aufweist.

### Beschreibung der Ausführungsbeispiele

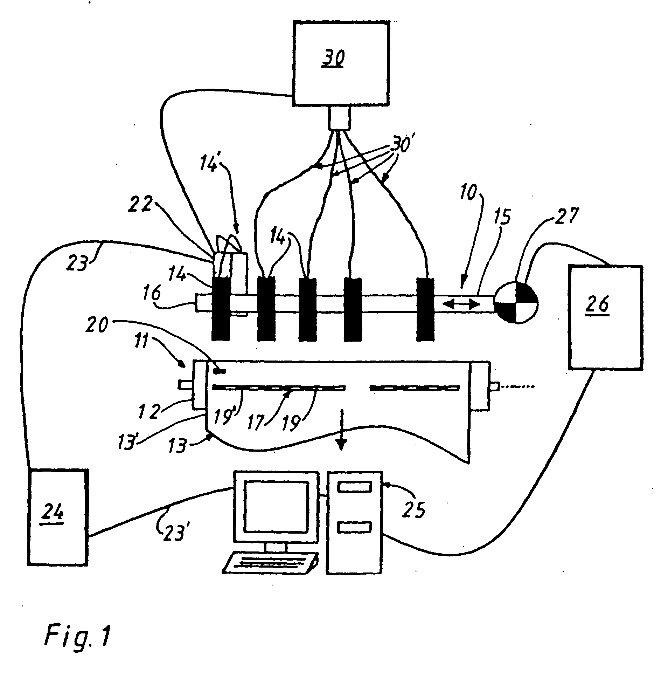

Fig. 1 veranschaulicht die erfindungsgemäße Abtastvorrichtung 10 in einer ersten Ausführungsform, welche während eines laufenden Druckprozesses zum densitometrischen Ausmessen eines über eine in einer Druckmaschine 11 aufgenommenen Walze 12 transportierten Druckmediums 13, wie beispielsweise Druck- bzw. Papierbahnen oder Druckbögen, dient. Dazu umfaßt die Abtastvorrichtung 10 eine Anordnung von im Ausführungsbeispiel im wesentlichen äquidistant voneinander beabstandet angeordneten Meßköpfen 14, wobei diese Anordnung von Meßköpfen 14 auf einer Schlitteneinrichtung 15, die auf einer Führungsschiene 16 verschieblich gelagert ist, montiert ist. Die Führungsschiene 16 erstreckt sich zusammen mit der Schlitteneinrichtung 15 quer zur Transportrichtung des Druckmediums 13 und ist über der als Meßwalze dienenden Walze 12 der Druckmaschine 11 und zwar parallel zu deren Zylinderachse montiert, so daß die Abtastvorrichtung 10 mittels der Schlitteneinrichtung 15 quer zur Transportrichtung und somit entlang der Breite der über die Walze 12 geführten Papierbahn 13 verschieblich ist. Dabei ist im Ausführungsbeispiel auf dem Druckmedium 13, also den Druckbögen oder Druckbahnen, ein als Meßstreifen ausgebildetes Meßobjekt 17 zur optischen Dichtemessung aufgebracht, wobei der Meßstreifen 17 eine linear angeordnete Reihe von Meßfeldern 19 umfaßt und sich quer zur Transportrichtung, d.h. in Richtung der Breite des Druckmediums 13, erstreckt. Jedes der Meßfelder 19 weist jeweils einen bestimmten Farbdichtewert auf. Zur Initialisierung der erfindungsgemäßen Abtastvorrichtung 10 ist auf dem Druckmedium 13 in einem in Transportrichtung vorbestimmten Abstand zum Meßstreifen 17 eine Positionsmarke als Referenzobjekt 20 vorgeordnet, wobei zur Erfassung des Referenzobjekts 20 im Ausführungsbeispiel ein weiterer Meßkopf 14' vorgesehen ist, der bezüglich der durch die Transportrichtung definierten Koordinatenachse gegenüber den übrigen Meßköpfen 14 nachgeordnet ist; durch das Erfassen einer derartigen Positionsmarke 20 mittels des zugeordneten Meßkopfes 14' erfolgt ein Triggersignal einer in der Abtastvorrichtung 10 aufgenommenen und benachbart zum für die Referenzmessung vorgesehenen Meßkopf 14' angeordneten Triggereinheit 22; über eine elektrische Zuleitung 23 wird das Triggersignal einer Steuerelektronikeinrichtung 24 zugeführt und verarbeitet, wonach das verarbeitete Signal über eine weitere elektrische Zuleitung 23' einer Datenverarbeitungsanlage 25 übermittelt wird. Im Zusammenwirken mit einem in der Datenverarbeitungsanlage 25 implementierten Steuerprogramm wird eine mit der Datenverarbeitungsanlage 25 elektrisch wirkverbundene Positionscontrollereinrichtung 26 angesteuert, welche die Abtastvorrichtung 10 quer zur Druckrichtung verschiebt und in Abhängigkeit des Referenzobjektes diese mittels eines Meßkopfes 14' bezüglich der optischen Dichte vermißt. Mit der parallel dazu mittels eines in der Abtastvorrichtung 10 angebrachten Wegmeßgebers 27 gemessenen relativen Position der Schlitteneinrichtung 15 orthogonal zur Transportrichtung des Druckmediums 13 sowie mit dem gemessenen Dichteverlauf wird die Lage der Meßobjekte othogonal zur Transportrichtung ermittelt.

Die translatorische Auslenkung der Abtastvorrichtung 10 mittels der Schlitteneinrichtung 15 erfolgt anhand der Lage der gedruckten Meßobjekte sowie der Lage des Referenzobjektes derart, daß koinzidierend mit dem am Ort der Meßwalze 12 einlaufenden Meßstreifen 17 die Schlitteneinrichtung 15 der Abtastvorrichtung 10 in Richtung der Breite auf die gewünschte Position gebracht wurde. Der auf dem durchlaufenden Druckmedium 13 mitgeführte Meßstreifen 17 ist somit von den Meßköpfen derAbtastvorrichtung 10 an den gewünschten Positionen erfaßbar. Jeder der zur Dichtemessung vorgesehenen Meßköpfe 14 mißt jeweils zugeordnete Meßabschnitte 19' auf dem Meßstreifen 17, d.h. jeder der zur Dichtemessung vorgesehenen Meßköpfe 14 wird von der Schlitteneinrichtung 15 über den ihm jeweils zugeordneten Meßabschnitt 19' geführt. Im Ausführungsbeispiel umfaßt ein in einem Meßstreifen 17 aufgenommener Meßabschnitt 19' zwei Meßzonen 19", wobei jede einzelne Meßzone 19" Meßfelder 19 unterschiedlicher Farbdichtewerte umfaßt. Zur Verbesserung der Meßgenauigkeit weist die Abtastvorrichtung 10 eine Blitzbelichtungseinheit 30 auf, die eine Lichtquelle und entsprechend der Anzahl der Meßköpfe mehrere Lichtleiterfasern 30' umfaßt, wobei das von der Lichtquelle emittierte Meßlicht über jeweils eine Lichtleitfaser 30' einem dazu korrespondierenden Meßkopf optisch zugeführt wird. Jeder über die jeweilige Lichtleitfaser 30' mit der Blitzbelichtungseinheit 30 optisch wirkverbundene Meßkopf erhält einen Meßlichtimpuls für die Zeitdauer des Abtastvorgangs, so daß die jeweils abzutastenden Meßfelder 19 ausreichend und definiert ausgeleuchtet sind. Die Ansteuerung der Blitzbeleuchtungseinheit 30 sowie das Auslösen des Abtastvorganges der Meßköpfe 14 erfolgt durch die Steuereinheit 24.

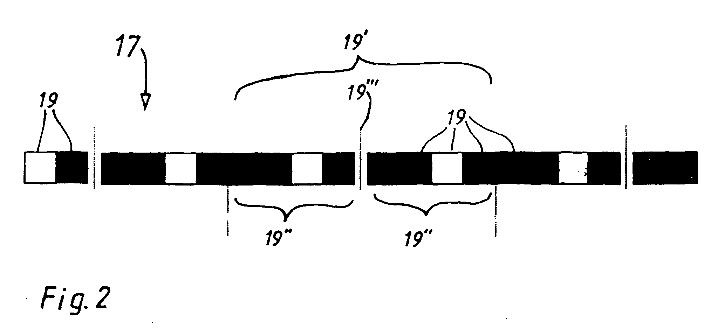

Fig. 2 zeigt in einer Teilansicht ein Ausführungsbeispiel des Meßstreifens 17, welcher auf dem Druckmedium 13 etwa quer zur Transportrichtung des Druckmediums 13 aufgebracht ist. Entsprechend der Anzahl der von der erfindungsgemäßen Abtastvorrichtung 10 umfaßten Meßköpfe 14 weist der Meßstreifen 17 eine Vielzahl von hintereinander angeordneten Meßzonen 19" auf, die im Ausführungsbeispiel identisch ausgebildet sind. Dazu umfaßt jede Meßzone 19" im Ausführungsbeispiel jeweils vier Meßfelder 19, wobei jedes Meßfeld 19 einen bestimmten Farbdichtewert aufweist. Jedem Meßkopf 14 sind jeweils zwei benachbarte Meßzonen 19" zugeordnet, wobei diese beiden Meßzonen 19" durch eine mittigzwischengeordnete schmale Spur 19''' voneinander getrennt sind. In einem Meßzyklus werden sowohl die definierten Meßfelder als auch die Dichte der Spur gemessen. Damit wird eine Lageänderung des Meßstreifens als auch eine mögliche Kontraktion detektiert und in die Positionierung der Meßköpfe quer zur Transportrichtung des Druckmediums berücksichtigt.

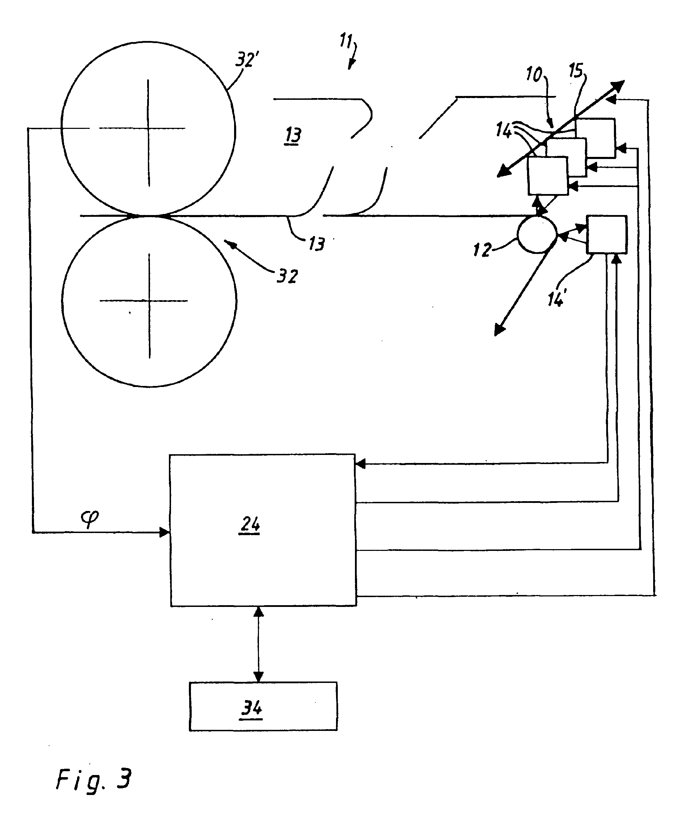

Fig. 3 zeigt in einer schematischen Darstellung eine weitere Ausführungsform der erfindungsgemäßen Abtastvorrichtung 10. Dabei wird das Druckmedium 13, wie z.B. eine Papierbahn, durch ein Druckwerk 32 der Druckmaschine 11 geführt und über eine Meßwalze 12 umgelenkt. Wie bei der ersten Ausführungsform umfaßt diese Ausführungsform der ebenfalls über der Meßwalze 12 angeordneten Abtastvorrichtung 10 eine Anzahl von äquidistant angeordneten Meßköpfen 14 zur Detektion des Meßstreifens 17, wobei die Abtastvorrichtung 10 mittels der Schlitteneinrichtung 15 entlang der Zylinderachse der Meßwalze 12 verschieblich ist. Wie bei der ersten Ausführungsform ist in Umlaufrichtung der Meßwalze 12 relativ zur Abtastvorrichtung 10 ein gesonderter Meßkopf 14' zum Detektieren einer als Referenzobjekt 20 vorgesehenen Positionsmarke ortsfest angeordnet. Alle Meßköpfe 14, 14' sind mit einer Steuerelektronikeinrichtung 24 elektrisch wirkverbunden. Über einen an einer der vom Druckwerk 32 umfaßten Druckwalzen 32' vorgesehenen und die aktuelle Winkellage ϕ der Druckwalze 32' erfassenden Meßwertgeber nimmt diese Steuerelektronikeinrichtung 24 ferner laufend den aktuellen Winkellage-Meßwert ϕ auf und verarbeitet diesen. Einerseits wird durch das Erfassen des Referenzobjektes bzw der Positionsmarke 20 mittels des zugeordneten Meßkopfes 14' die Lage des Referenzobjektes in Bezug zur Winkellage ϕ der maßgebenden Druckwalze ermittelt, andererseits wird anhand der Lage des Referenzobjektes und der aktuellen Winkellage ϕ von der Steuerelektronik 24 die Abtastung der Meßfelder getriggert sowie das Suchfenster zur Erfassung des Referenzobjektes selbst vorgegeben. Die Meßköpfe 14, die Blitzeinheit 30 sowie die Schlitteneinrichtung 15 erhalten von der Steuerelektronikeinrichtung 24 Trigger- und Stellsignale zum Abtasten der Meßfelder sowie zur Ausführung der sich quer zur Transportrichtung erstreckenden Bewegung. Über einen mit der Steuerelektronikeinrichtung 24 elektrisch wirkverbundenen Prozeßleitstand 34 sind einerseits in der Steuerelektronikeinrichtung 24 anfallende Meßdaten abrufbar und gleichzeitig visualisierbar und andererseits Daten in den dort ablaufenden Steuerungsprozeß einspeisbar.

Mithin ergibt sich für die in in Fig. 1 und 3 veranschaulichten Ausführungsformen folgendes Funktionsprinzip für die dem erfindungsgemäßen Abtastverfahren zugrundeliegende Triggerung: Die Triggerung erfolgt in Abhängigkeit von dem an der Druckwalze 32' vorgesehenen als Drehgeber oder Winkelgeber ausgebildeten Meßwertgeber, der aufgrund des vorbestimmten Abstands zwischen Meßobjekt 17 und Referenzobjekt 20 mit dem in Transportrichtung des Druckmediums 13 liegenden Ort des Referenzobjekts 20 und des Meßobjekts 17 präzise synchronisierbar ist, so daß der über den Meßwertgeber ermittelte Wert des Winkels ϕ der Druckwalze 32' ein Maß für die relativ zum Ort des Referenzobjektes 20 bezogene Lage des Meßobjektes 17 ist. Der zur Detektion des Referenzobjekts 20 vorgesehene Meßkopf 14' erhält von der Steuerelektronikeinrichtung 24 ein vom Winkelgeber und der möglichen Winkellage des Referenzobjektes abgeleitetes Ortsfenster, innerhalb dessen der Meßkopf 14' nach dem Referenzobjekt 20 sucht. Bei einem detektierten Referenzobjekt 20 übermittelt der Meßkopf 14' der Steuerelektronikeinrichtung 24 ein entsprechendes Signal, wobei die Steuerelektronikeinrichtung 24 den zeitlich dazu korrespondierenden Wert des Winkels ϕ abfragt, abspeichert und über einen Filteralgorithmus die aktuelle, für die weiteren Aktionen maßgebende Winkellage des Referenzobjektes ermittelt. Parallel dazu bzw. zeitlich entkoppelt wird bei Erreichen des unter Berücksichtigung des Druckwalzenradius berechneten Triggerwinkels ϕ_{T}, welcher in einer funktionalen Beziehung zur Winkellage des Referenzobjektes und zum Abstand Referenzobjekt 20 - Meßobjekt 17 steht und somit als Fenster zum Erfassen des zur Dichtemessung vorgesehenen Meßobjektes 17 dient, von der Steuerelektronikeinrichtung 24 ein Triggersignal an die Blitzeinheit und die Meßköpfe ausgelöst, wonach die Blitzeinheit zusammen mit den Meßköpfen die Dichte der jeweiligen Meßobjekte mißt. Während des Abtastvorganges erfaßt jeder Meßkopf 14 innerhalb der ihm jeweils zugeordneten Meßzonen 19" eine gemäß Fig. 2 zwischengeordnete Spur 19'''. Das Vermessen der jeweiligen Spuren 19''' erlaubt eine Kalibrierung der Meßkopfpositionen quer zur Transportrichtung. Dieses Triggerungsprinzip ist somit vorteilhaft bereits während des Hochfahrens der Druckmaschine 11 einsetzbar, wenn die Transportgeschwindigkeit noch nicht konstant ist. Außerdem ist dieses Triggerungsverfahren dann vorteilhaft beim Hochfahren einzusetzen, wenn das Referenzobjekt noch nicht detektiert werden kann, die Lage der Meßobjekte jedoch bekannt ist.

Eine dazu alternative Triggerungsvariante des erfindungsgemäßen Abtastverfahrens weist folgendes Funktionsprinzip auf: Die Triggerung erfolgt in Abhängigkeit von der Detektion eines Referenzobjekts 20 durch den dafür vorgesehenen Meßkopf 14'; da der Abstand zwischen Referenzobjekt 20 und Meßobjekt 17 in Transportrichtung vorbestimmt und in derSteuerelektronikeinrichtung 24 gespeichert ist, löst die Steuerelektronikeinrichtung 24 bei einem detektierten Referenzobjekt 20 ein gegenüber diesem Ereignis zeitlich verzögertes Triggersignal an die Abtastvorrichtung 10 aus, wonach die Abtastvorrichtung 10 ihre translatorische Auslenkbewegung ausführt und das am Meßort, d.h. am Ort der Meßwalze 12, einlaufende Meßobjekt 17 abtastet. Dabei steht die zeitliche Verzögerung desTriggersignals in funktionaler Abhängigkeit von dem vorbestimmten Abstand zwischen Referenzobjekt 20 und Meßobjekt 17 und der laufend ermittelten Transportgeschwindigkeit des Druckmediums 13 in der Druckmaschine 11. Diese Triggerungsvariante ist vorzugsweise während des Regelbetriebs bzw. der Fortdruckphase der Druckmaschine 11 einsetzbar, wenn die Transportgeschwindigkeit einen annähernd konstanten Geschwindigkeitswert einnimmt.

Bei beiden Triggerungsvarianten kann vorgesehen sein, daß das Triggersignal entsprechend der Papierdehnung zwischen dem Ort des Winkellage-Meßwertgebers und dem Dichtemeßort fortlaufend korrigiert wird, indem ein Referenzobjekt 20 bzw. eine Positionsmarke auf der Papierbahn 13 in der Nähe des Meßortes abgetastet wird. Um auch ein Referenzobjekt, das mit geringer optischer Dichte auf dem Druckmedium 13 aufgedruckt ist, sicher detektieren zu können, kann die Korrektur des Triggersignals durch analoges oder digitales Filtern erfolgen. Um zu vermeiden, daß Referenzobjekt-ähnliche Elemente auf dem Druckmedium 13 als Referenzobjekte 20 ungewollt detektiert werden, kann ein Such- bzw. Ortsfenster für das Referenzobjekt 20 definiert werden, dessen Lage relativ zum Triggersignal bestimmt wird. Das Suchfenster wird vor dem erwarteten Durchlauf des Referenzobjekts 20 geöffnet und nach der Detektion des Referenzobjekts 20 geschlossen. Es kann ferner als Referenzobjekt 20 beispielsweise auch ein einzelnes Meßfeld 19 eines zur Dichtemessung vorgesehenen Meßstreifens 17 verwendet werden. Schließlich sind auch Passermarken als Referenzobjekte 20 verwendbar.

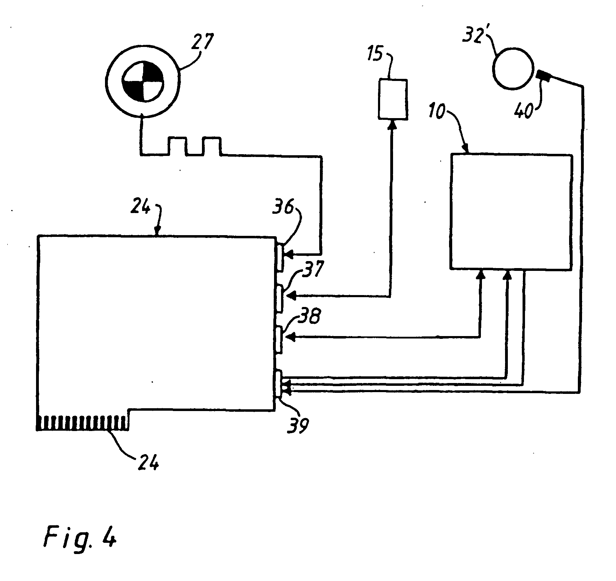

Fig. 4 zeigt eine konkrete Ausgestaltung der Steuerelektronikeinrichtung 24, die als PC-Einsteckplatine mit einem Steckverbinder 24' für eine entsprechende Schnittstelle eines Personalcomputers als Prozeßleitstand 34 ausgebildet ist. Die Steuerelektronikeinrichtung 24 weist mehrere Eingabe/Ausgabe-Schnittstellen 36, 37, 38, 39 auf, von denen eine erste Schnittstelle 36 mit dem der Positionscontrollereinrichtung 26 der Abtastvorrichtung 10 zugeordneten Wegmeßgeber 27 zur Bestimmung der relativen Position der Schlitteneinrichtung 15 bezüglich der quer zur Transportrichtung des Druckmediums 13 orientierten Koordinatenachse elektrisch wirkverbunden ist, wobei der Wegmeßgeber 27 vorzugsweise als Inkrementalgeber mit Nullindex ausgebildet ist. Eine zweite Schnittstelle 37 ist zur translatorischen Bewegungsbetätigung der Abtastvorrichtung 10 vorgesehen und im Ausführungsbeispiel als serielle RS422 - Schnittstelle ausgebildet, während eine dritte Schnittstelle 38 der densitometrischen Meßwerterfassung durch die Meßköpfe 14 dient und wegen der mithin erforderlichen höheren Datenübertragungsrate als serielle RS422 - Schnittstelle ausgebildet ist und ferner eine vierte Schnittstelle 39 einerseits der Meßwerterfassung sowohl des an der Druckwalze 32' zur Aufnahme der Winkellage angeordneten Meßwertaufnehmers 40 als auch des zur Referenzobjekterfassung vorgesehenen Meßkopfes 14' dient und andererseits zur Übermittlung von Triggersignalen an die Meßköpfe 14, 14' vorgesehen ist.

Das erfindungsgemäße Abtastverfahren ist zur Justage bzw. Kalibrierung der Meßköpfe einsetzbar, wobei zur exakten Positionierung der Meßköpfe 14 relativ zu den Meßfeldern 19 bzw. Meßzonen 19" ein Meßfeld 19 quer zur Transportrichtung des Druckmediums 13 dadurch erkannt wird, indem ein zugeordneter Meßkopf 14 schrittweise verfahren und ein Dichtemaximum bzw. Dichteminimum gesucht wird. Da die Meßwalze 12, die im übrigen auch zusätzlich die Funktion einer Kühlwalze erfüllen kann, einer Trocknereinrichtung der Druckmaschine 11 nachgeordnet ist, kann über die meßtechnisch ermittelte Lage bzw. Abstände der einzelnen Spuren 19''' durch eine Justierung der Meßkopfabstände ein möglicher Schrumpf des Papiers kompensiert werde. Der Meßstreifen 17 kann als Druckbild auf dem Druckmedium 13 aufdruckt sein.

Es kann ferner vorgesehen sein, daß zur Lagebestimmung der Meßobjekte 17 mehrere Referenzobjekte 20 vorgesehen sind, die zumindest quer zur Druckrichtung angeordnet sind. Damit kann eine normalerweise auftretende Querkontraktion des Druckmediums 13 bei der Positionierung der Sensormittel kompensatorisch berücksichtigt werden. Dabei können in Abhängigkeit von der Lage des Referenzobjekts 20, dem Abstand vom Referenzobjekt 20 zum Meßobjekt 17 und der Lage eines Druckobjekts sowie dem Zustand des Bezugssystems die Sensormittel in Querrichtung derart positioniert werden, daß die Querlage dann auf die gewünschte Position gestellt ist, wenn die Meßobjekte die Sensormittel passieren. Als Bezugssystem für die Lage des Referenzobjektes 20 sind Maschinengrößen wie beispielsweise die Winkellage einer Druckwalze (Druckrichtung) oder der Abstand zur Maschinenmitte (Querrichtung) vorgesehen. Demgemäß ist einerseits die Detektierung des Referenzobjekts 20 und andererseits die von der auf einen Lagesensor bezogenen absoluten Lage des Meßobjekts 17 zeitlich entkoppelte Abtastung des Meßobjekts 17 möglich. Um bereits während des Hochfahrens des Druckprozesses, d.h. wenn das Referenzobjekt noch nicht erkennbar ist, Dichtemessungen vornehmen zu können, wird bei geeigneter Größe der Meßobjekte auf bekannte, abgespeicherte Lagen von Referenzobjekten zurückgegriffen.

Das Abtastverfahren und die -vorrichtung sind auch zur Farb- bzw. spektralen Messung anwendbar.

## Patentansprüche

1. Abtastverfahren zum Betreiben einer Abtastvorrichtung zur optischen Dichtemessung und/oder Farb- bzw. spektralen Messung von wenigstens einem auf einem Druckmedium angeordneten Meßobjekt, wobei das Meßobjekt mit Sensormitteln abgetastet wird, **dadurch gekennzeichnet, daß** in Abhängigkeit von der Detektierung der Lage eines auf dem Druckmedium (13) angeordneten Referenzobjektes (20) und der relativen Lage des Meßobjekts (17) zum Referenzobjekt (20) das Meßobjekt (17) abgetastet wird.

2. Abtastverfahren nach Anspruch 1, **dadurch gekennzeichnet, daß** einer in Abhängigkeit von der Detektierung des Referenzobjekts (20) aktivierten translatorischen Bewegung der Sensormittel (14) das Meßobjekt (17) abgetastet wird.

3. Abtastverfahren nach Anspruch 2, **dadurch gekennzeichnet, daß** im Zeitpunkt der Detektierung des Referenzobjekts (20) ein dazu korrespondierender Drehwinkel (ϕ) einer das Druckmedium (13) führenden Walze (32') gemessen und abgespeichert wird.

4. Abtastverfahren nach Anspruch 3, **dadurch gekennzeichnet, daß** nach Maßgabe des Durchmessers der Walze (32'), des gemessenen Drehwinkels (ϕ) und des in Transportrichtung des Druckmediums (13) vorbestimmt verlaufenden Abstands zwischen dem Referenzobjekt (20) und dem Meßobjekt (17) ein Drehwinkelinkrement vorausberechnet und bei Erreichen dieses Drehwinkelinkrements das Meßobjekt abgetastet wird.

5. Abtastverfahren nach Anspruch 1 oder 2, **dadurch gekennzeichnet, daß** nach Maßgabe der laufend ermittelten Geschwindigkeit des Druckmediums (13) und des in Transportrichtung des Druckmediums (13) vorbestimmt verlaufenden Abstands zwischen dem Referenzobjekt (20) und dem Meßobjekt (17) eine gegenüber dem Zeitpunkt der Detektion des Referenzobjekts (20) zeitlich verzögert in Gang gesetzte Abtastung ausgelöst wird.

6. Abtastvorrichtung zur Durchführung des Abtastverfahrens nach einem der Ansprüche 1 bis 5 mit wenigstens einem auf einem Druckmedium angeordneten Meßobjekt und mit Sensormitteln zum Abtasten des Meßobjekts, **dadurch gekennzeichnet, daß** die Sensormittel eine Anzahl von Meßköpfen (14) umfassen und daß in Abhängigkeit von der mittels eines ausgewählten Meßkopfes (14') vorgenommenen Detektierung eines auf dem Druckmedium (13) in einem in Transportrichtung des Druckmediums (13) vorbestimmten Abstand zum Meßobjekt (17) angeordneten Referenzobjektes (20) die daraufhin aktivierten Meßköpfe (14) das Meßobjekt (17) detektieren und abtasten.

7. Abtastvorrichtung nach Anspruch 6, **dadurch gekennzeichnet, daß** das Meßobjekt (17) als sich in seiner Längserstreckung annähernd entlang einer quer zur Transportrichtung des Druckmediums (13) verlaufenden Koordinatenrichtung erstreckender Meßstreifen ausgebildet ist.

8. Abtastvorrichtung nach Anspruch 7, **dadurch gekennzeichnet, daß** der Meßstreifen (17) eine linear angeordnete Kette von Meßfeldern (19) bestimmter Farbdichtewerte aufweist.

9. Abtastvorrichtung nach Anspruch 8, **dadurch gekennzeichnet, daß** jedem der Meßköpfe (14) wenigstens ein Meßfelder (19) aufweisender Meßabschnitt (19') zur Detektion und Abtastung zugeordnet ist.

10. Abtastvorrichtung nach Anspruch 9, **dadurch gekennzeichnet, daß** jeder Meßabschnitt (19') zwei benachbarte Meßzonen (19") umfaßt, die durch eine schmale zwischengeordnete Spur voneinander beabstandet sind.

11. Abtastvorrichtung nach Anspruch 10, **dadurch gekennzeichnet, daß** die Meßzonen (19") jeweils identisch wiederkehrende Sequenzen von Farbdichtewerten aufweisen.

12. Abtastvorrichtung nach Anspruch 10 oder 11, **dadurch gekennzeichnet, daß** jede Meßzone (19") jeweils Meßfelder (19) gleicher Längsabmessung aufweist.

13. Abtastvorrichtung nach einem der Ansprüche 10 bis 12, **dadurch gekennzeichnet, daß** jede Meßzone (19") jeweils eine konstante Zahl von Meßfeldern (19) aufweist.

14. Abtastvorrichtung nach einem der Ansprüche 10 bis 13, **dadurch gekennzeichnet, daß** jede Meßzone (19") wenigstens einen minimalen und einen maximalen Farbdichtewert aufweist.

15. Abtastvorrichtung nach einem der Ansprüche 8 bis 14, **dadurch gekennzeichnet, daß** als Referenzobjekt (20) wenigstens ein Meßfeld (19) eines Meßstreifens (17) vorgesehen ist.

16. Abtastvorrichtung nach einem der Ansprüche 7 bis 15, **dadurch gekennzeichnet, daß** die zur Abtastung vorgesehenen Meßköpfe (14) der Abtastvorrichtung (10) entlang einer annähernd quer zur Transportrichtung des Druckmediums (13) verlaufenden Koordinatenrichtung hintereinander angeordnet sind, wobei die Abtastvorrichtung (10) entlang dieser Koordinatenrichtung bewegbar ist.

17. Abtastvorrichtung nach Anspruch 16, **dadurch gekennzeichnet, daß** die Abtastvorrichtung (10) über einer das Druckmedium (13) führenden Walze (12) einer Druckmaschine (11) angeordnet ist.

18. Abtastvorrichtung nach Anspruch 16 oder 17, **dadurch gekennzeichnet, daß** die Meßköpfe (14) auf einer Schlitteneinrichtung (15) der Abtastvorrichtung (10) angeordnet sind, wobei die Schlitteneinrichtung (15) entlang der quer zur Transportrichtung des Druckmediums (13) verlaufenden Korrdinatenrichtung translatorisch bewegbar ist.

19. Abtastvorrichtung nach Anspruch 18, **dadurch gekennzeichnet, daß** im schrittweisen Takt der translatorischen Bewegung der Schlitteneinrichtung (15) jeder der zur Dichtemessung bestimmten Meßköpfe (14) jeweils einen ihm zugeordneten Meßabschnitt (19') auf dem zur Dichtemessung vorgesehenen Meßstreifen (17) abtastet.

20. Abtastvorrichtung nach einem der Ansprüche 6 bis 19, **dadurch gekennzeichnet, daß** die Abtastvorrichtung (10) mit einem an einer das Druckmedium (13) führenden Walze (32') vorgesehenen Winkelmeßgeber zum Erfassen des Drehwinkels der Walze (32') elektrisch wirkverbunden ist.

21. Abtastvorrichtung nach Anspruch 20, **dadurch gekennzeichnet, daß** die Abtastvorrichtung (10) eine Steuerelektronikeinrichtung (24) aufweist, die bei der Detektion eines Referenzobjekts (20) den dazu zeitlich korrespondierenden Drehwinkel der Walze (32') ermittelt und bei Erreichen eines demgegenüber vorausberechneten Drehwinkel-Inkrements die Abtastvorrichtung (10) aktiviert.

22. Abtastvorrichtung nach Anspruch 20, **dadurch gekennzeichnet, daß** die Abtastvorrichtung (10) eine Steuerelektronikeinrichtung (24) aufweist, die bei der Detektion eines Referenzobjekts (20) mittels eines vorausberechneten zeitlich verzögerten Signals die Abtastvorrichtung (10) aktiviert, wobei das Maß der zeitlichen Verzögerung des Signals funktional von dem vorbestimmten Abstand zwischen dem Referenzobjekt (20) und dem Meßobjekt (17) abhängig ist.
